# DEMANDE DE BREVET EUROPEEN

(11) **EP 2 117 218 A1**
(43) Date de publication de la demande: **11.11.2009**
(21) Numéro de dépôt: 09158072.0
(22) Date de dépôt: 16.04.2009
(51) Int. Cl.: H04M 3/533

(54) **Conversion voix vers texte en temps-réel pour services de télécommunication**

(30) Priorité: 07.05.2008 FR 0853012
(71) Demandeur: Alcatel Lucent, 75008 Paris (FR)
(72) Inventeur: Martin, Jean-Stéphane, 91620, NOZAY (FR); Froment, Thomas, 91620, NOZAY (FR)
(74) Mandataire: Chaffraix, Sylvain

(57) **Abrégé**

Serveur de messagerie vocale (S) connecté à un réseau de communication (N) comportant une interface multimédia (INTM) pour recevoir une session multimédia (SM) provenant d'un client appelant (A) et destiné à un utilisateur d'un client appelé (B), et une mémoire (MEM) destiné à mémoriser un contenu de la session multimédia. Il dispose en outre d'un convertisseur (STT) pour convertir à la volée toute ou partie de la session multimédia (SM) en informations textuelles et d'une interface textuelle (INTT) pour transmettre les informations textuelles au client appelé.

## Description

La présente invention est relative aux services fournis par les réseaux de communication permettant la convergence de différents modes de transmission d'information, tels que voix, vidéo et données.

Elle s'applique particulièrement, mais non exclusivement, aux architectures de communication appelés « IMS » (pour « *IP Multimédia Subsystem* ») et spécifiées par les organismes de standardisation 3GPP et TISPAN.

Parmi les services qui peuvent être fournis par une architecture de communication figure la messagerie vocale. Lorsqu'un utilisateur appelé ne souhaite pas être joint ou lorsqu'il n'est pas disponible, la session multimédia qui lui est destinée peut être réacheminée vers un serveur de messagerie vocale. Ce serveur transmet des invites vocales et est aptes à recevoir et mémoriser des informations vocales formant un message.

L'utilisateur appelé peut habituellement prendre connaissance du message en se connectant au serveur de messagerie vocale après que le message a été mémorisé.

Ce transfert vers la messagerie vocale peut être déclenché dans plusieurs situations :
- L'utilisateur a positionné un paramètre de son profil, stocké sur le réseau de communication, pour que tout appel soit automatiquement acheminé vers la messagerie.
- Le client (ou les clients) de l'utilisateur est éteint ou inaccessible pour le réseau de communication.
- Le client (ou les clients) est occupé et ne supporte pas de doubles appels.
- L'utilisateur ne répond pas après un certain temps d'attente (ou un certain nombre de sonneries).

Le réacheminement vers un serveur de messagerie vocale peut être provoqué à l'initiative de l'utilisateur appelé à la réception d'un appel sur son client de communication. Si l'utilisateur est occupé ou, plus généralement, ne souhaite pas prendre la communication, il peut initier ce réacheminement.

Par exemple, un utilisateur en réunion ne peut pas facilement prendre un appel entrant sur son téléphone portable et peut être amené à le transmettre vers sa messagerie vocale.

Dans cette situation, la session de communication est établie entre le client appelant et le serveur de messagerie vocale. Le client appelé n'est plus informé de cette session, hormis éventuellement un signal l'avertissant de la terminaison de cette session et de la mémorisation d'un message au sein du serveur.

Cet état de l'art n'est pas satisfaisant car l'utilisateur appelé ne peut pas prendre connaissance du contenu du message laissé par l'utilisateur appelant avant la fin du message.

En outre, l'utilisateur ne peut pas revenir sur sa décision. Il ne peut pas juger de l'importance de l'appel entrant et ne peut pas établir la communication une fois le réacheminement décidé.

Certaines solutions comme celle exposée dans la demande de brevet US2007/0127631, permettent de convertir le contenu du message laissé par l'utilisateur appelant en texte écrit transmis à l'utilisateur appelé. Cela permet à ce dernier de prendre connaissance des informations de façon discrète. Toutefois, cette solution ne permet pas de résoudre non plus les problèmes exposés plus haut : l'utilisateur appelé ne peut prendre connaissance du message qu'après la terminaison du message, et a *fortiori*, il ne peut établir une session avec l'appelant en cours d'enregistrement du message.

L'invention a pour but d'améliorer la situation en offrant des possibilités supplémentaires à l'utilisateur.

Elle a pour premier objet un serveur de messagerie vocale connecté à un réseau de communication comportant une interface multimédia pour recevoir une session multimédia provenant d'un client appelant et destiné à un utilisateur d'un client appelé et une mémoire destiné à mémoriser un contenu de cette session multimédia. Le serveur est **caractérisé en ce qu**'il dispose en outre d'un convertisseur pour convertir à la volée toute ou partie de la session multimédia en informations textuelles et d'une interface textuelle pour transmettre ces informations textuelles ou client appelé.

Selon un mode de réalisation de l'invention, l'interface textuelle est prévue pour transmettre lesdites informations textuelles au sein d'une session de messagerie instantanée. La session de messagerie instantanée peut être transportée par le protocole MSRP.

Le convertisseur et l'interface textuelle peuvent n'être actifs qu'en présence d'un paramètre dans le profil de l'utilisateur.

Le serveur peut également disposer d'une interface utilisateur permettant, durant la session de messagerie instantanée, de recevoir un signal de remplacement provenant du client appelé. Le serveur est alors prévu pour à la réception d'un tel signal, interrompre la transmission des informations textuelles et établir une nouvelle session multimédia entre le client appelé et le client appelant.

Le serveur peut disposer d'une interface utilisateur permettant, durant la session de messagerie instantanée, de recevoir un signal de redirection provenant du client appelé, et être prévu pour à la réception d'un tel signal établir une nouvelle session multimédia entre le client appelant et un client tiers dont l'identifiant est fourni par le signal de redirection.

L'invention a également pour objet un procédé de communication entre un client appelant et un client appelé, consistant en la transmission d'une session multimédia destiné à un utilisateur du client appelé vers un serveur de messagerie vocale. Ce procédé se **caractérise en ce qu**'il comporte une étape de conversion à la volée de tout ou partie de la session multimédia en informations textuelles et une étape de transmission de ces informations textuelles vers le client appelé.

Selon un mode de réalisation de l'invention, les informations textuelles sont transmises vers le client appelé au sein d'une session de messagerie instantanée. Cette session de messagerie instantanée peut être transportée par le protocole MSRP.

Le procédé selon l'invention peut comporter en outre une étape préalable de paramétrage du profil de l'utilisateur, consistant notamment à déterminer un paramètre précisant si les étapes de conversion et de transmission doivent ou non être déclenchées à réception par le serveur de messagerie vocale d'une session multimédia destiné à l'utilisateur.

Il peut également être prévu que durant l'étape de transmission, le client appelé puisse transmettre un signal de remplacement vers le serveur de messagerie vocale, déclenchant ainsi l'interruption de la transmission des informations textuelles et l'établissement d'une nouvelle session multimédia entre le client appelant et le client appelé.

L'invention a également pour objet un client de communication disposant de moyens de réception d'informations textuelles, d'un dispositif d'affichage prévue pour afficher tout ou partie du contenu de ces informations textuelles, et d'une interface d'entrée apte à être actionnée par un utilisateur. Ce client se **caractérise en ce que** les informations textuelles forment une session textuelle établie avec un serveur de messagerie vocale et associée à un client appelant, et en ce que l'interface d'entrée comporte un moyen pour déclencher un signal destiné au serveur de messagerie vocale pour établir une session multimédia avec le client appelant.

Selon un mode de réalisation la session textuelle est une session de messagerie instantanée. Celle-ci peut être transportée par le protocole MSRP.

L'interface d'entrée peut disposer d'un moyen pour déclencher un signal destiné au serveur de messagerie vocale pour interrompre la session textuelle.

Grâce à l'invention, l'utilisateur peut être tenu informé du contenu du message laissé par un appelant sans avoir à prendre l'appel.

Il est possible pour l'utilisateur en réunion de lire les messages qui lui sont destinés en temps réel. Selon un mode de réalisation de l'invention, il lui est possible de décider de prendre l'appel (éventuellement en sortant de la salle de réunion) si le contenu lui semble suffisamment important ou prioritaire.

De même un utilisateur situé dans un environnement où le silence est requis (salle de spectacle, etc.) peut néanmoins prendre connaissance de ses messages sans retard.

En outre, un avantage supplémentaire de l'invention est de permettre à un utilisateur situé dans un environnement bruyant de prendre connaissance de ses messages sans avoir à se déplacer et également sans retard.

Enfin, ce service permettant la convergence des différents médias (voix, texte, vidéo) peut n'être implémenté qu'avec un seul protocole de signalisation.

D'autres avantages encore sont susceptibles d'être apportés par la présente invention.

Des mises en oeuvre de l'invention vont maintenant être décrites en liaison avec les figures annexées.

La figure 1 illustre le contexte dans lequel s'insère l'invention.

La figure 2 représente de façon schématique une interface homme-machine d'un client de communication.

La figure 3 schématise une séquence des messages de signalisation et des sessions établies dans le cadre d'une mise en oeuvre de l'invention.

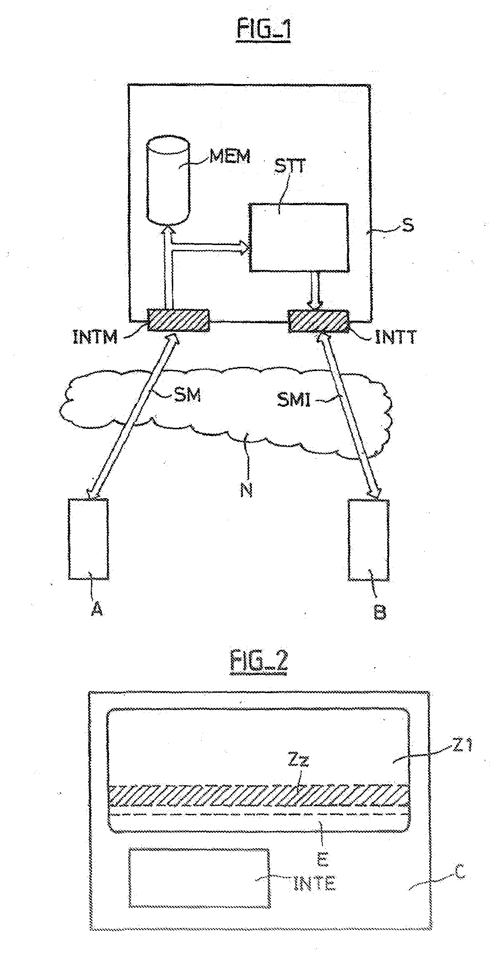

Un réseau de communication N permet de connecter des clients de communication A, B et des serveurs applicatifs S. Le réseau N contient différents équipements (routeurs, passerelles, serveurs de signalisation, etc.) non représentés sur la figure 1. Les clients de communication A, B peuvent être de différents types : terminaux mobiles, téléphones IP, ordinateur comportant un module logiciel de téléphonie ou vidéophonie, assistants numériques personnels, etc.

Les serveurs applicatifs peuvent également être de différents types et permettent de fournir différents services aux utilisateurs du réseau de communication N.

Dans l'exemple de la figure 1, l'utilisateur du client A veut contacter l'utilisateur du client B, mais l'appel est réacheminé vers un serveur de messagerie vocale S. Une session multimédia MS est donc établie entre le client appelant A et le serveur de messagerie vocale S.

Cette messagerie peut ne pas être que vocale et peut comporter en outre un aspect vidéo. Par « messagerie vocale » on entend donc une messagerie supportant au moins un trafic vocal et l'on utilise dans la description l'expression « messagerie vocale » par facilité.

Le serveur de messagerie vocale comporte une interface multimédia INTM prévue pour recevoir la session multimédia SM. Cette session multimédia est généralement (mais pas nécessairement) transportée par le protocole RTP défini par le RFC 3550 de l'IETF, intitulé « *A Transport Protocol for Real-Time Applications* ».

Il dispose également d'une interface de signalisation, non représentée sur la figure 1, permettant d'établir cette session multimédia. De façon classique en soi, cette signalisation peut être transportée par le protocole SIP spécifiée par le RFC 3261 de l'IETE et intitulée « *Session Initiation Protocol* »).

Certains des messages SIP peuvent comporter du contenu SDP permettant de négocier certains paramètres de la session multimédia à établir (Codec, etc.). Ce protocole SDP (« *Session Description Protocol* ») est spécifié par le RFC 2327 de l'IETF. La négociation par le protocole SIP/SDP d'une session multimédia transportée par le protocole RTP est spécifiée par le RFC 3264 intitulé « *An Offer*/*Answer Model with the Session* Description *Protocol (SDP)* »

Le serveur de messagerie vocale S dispose en outre d'une mémoire MEM permettant de mémoriser un contenu de ladite session multimédia SM. Ce contenu peut former tout ou partie de cette session multimédia. Généralement, le contenu mémorisé ne représente que la partie de la session multimédia qui suit un message d'invitation à laisser un message transmis par le serveur de messagerie vocale.

Dans cette mémoire MEM, les messages ainsi laissés par les clients appelants peuvent être associés à un identifiant de l'utilisateur appelé, afin que celui-ci fuisse facilement accéder à l'ensemble des messages le concernant et ne puisse accéder aux messages ne le concernant pas.

Les messages sont classiquement des messages uniquement audio, mais il peut s'agir plus généralement de messages multimédias, notamment vidéo.

Ces messages peuvent être accessibles par des moyens connus en soi qui font parties de l'état de la technique pour l'homme du métier concevant des serveurs applicatifs et des serveurs de messagerie vocale.

Le serveur de messagerie vocale comporte en outre un dispositif de conversion de voix vers texte STT. Ce convertisseur est prévu pour traiter à la volée un contenu de la session multimédia SM. Ce contenu peut correspondre au message laissé par le client appelant. Entre l'interface multimédia INTM et le convertisseur STT, le serveur de messagerie vocale S peut également disposer d'une mémoire tampon, distincte de la mémoire MEM et non représentée sur la figure 1.

Le convertisseur STT peut être conforme aux dispositifs existants de reconnaissance de la parole.

Différents produits existent dans le commerce et l'invention est indépendante du produit et de la technologie employée. La société Nuance propose par exemple différentes solutions de ce type. La demande de brevet US 5,809,464 de la société Alcatel fait référence également à l'utilisation d'un tel dispositif de conversion voix vers texte au sein d'un réseau de communication. L'ensemble de ces solutions font partie des technologies accessibles à l'homme du métier.

Le texte généré par le convertisseur STT peut être mémorisé dans une mémoire tampon, non représentée, et est transmis au client appelé B, via une interface textuelle INTT.

Cette interface textuelle INTT peut mettre en oeuvre un protocole de messagerie instantanée, et établir une session de messagerie instantanée SMI avec le client de communication appelé B.

Le protocole en question peut par exemple être le protocole MSRP spécifié par le RFC 4975 de l'IETF intitulé « *The Message Session Relay Protocol* ». Mais d'autres protocoles sont également possibles, comme par exemple le protocole TOTE (« *Session Based Trivial Object Transfer and Exchange* ») proposé par la document « droft-rosenberg-sip-tote-00 » en février 2008.

Ces protocoles permettent de transmettre une série de messages instantanés à l'intérieur d'une session. De cette façon, une fois la session SMI établie entre le serveur de messagerie vocale S et le client appelé B, des informations textuelles peuvent être transmises au fil de l'eau, correspondant au message vocal en train d'être laissé par le client appelant A.

Chaque message peut correspondre à une phrase par exemple, déterminée par l'analyse grammaticale effectuée par le convertisseur STT. Le client appelé B peut être prévu pour afficher chaque message (dans ce cas équivalent à chaque phrase) au fur et à mesure de so réception. De cette façon l'utilisateur du client B test informé au plus, tôt du contenu de la session multimédia SM.

Ainsi, l'invention permet de tirer profit des possibilités des technologies disponibles en transmission de données au sein d'un réseau de communication, par une combinaison originale des protocoles de transmission temps-réel de sessions multimédia, et de transmission de messages textuels instantanées et des technologies de conversion voix vers texte.

Elle permet de résoudre les situations précédemment décrites dans lesquels l'utilisateur du client appelé B n'est pas à même de recevoir un appel entrant (et donc d'établir la session multimédia demandé par le client appelant. A) :
- Lorsque l'utilisateur du client appelé B se situe dans un environnement bruyant. Se sachant incapable d'entendre et de converser avec l'utilisateur du client appelant A, il peut choisir d'utiliser le service de conversion voix vers texte et de lire le message laissé par l'appelant, en temps-réel.
- Lorsque l'utilisateur est dans un environnement tel qu'une réunion, il peut également choisir cette fonctionnalité afin de ne pas perturber son déroulement.
- L'utilisateur peut aussi être en train d'utiliser son client de communication B pour un autre usage. Par exemple, il peut être en train de regarder du contenu vidéo (un film, une émission télévisuelle, etc.) et peut souhaiter ne pas être dérangé tout en souhaitant être tenu informé du contenu du message que l'appelant peut laisser.

La figure 2 illustre une interface graphique possible d'un client de communication B. Ce client peut être un téléphone mobile, une télévision, un assistant personnel numérique, un ordinateur... ou tout autre dispositif, fixe ou mobile, ayant des fonctionnalités de télécommunication (éventuellement au travers d'un réseau local) et d'affichage.

Il dispose d'une zone d'affichage ou écran E, et d'une interface d'entrée INTE. Cette interface d'entrée INTE permet à l'utilisateur d'entrer des commandes à destination du client B. Ces deux interfaces peuvent ne pas être disjointes : certains écrans peuvent être en effet tactiles, de sorte que tout ou partie de l'interface d'entrée INTE peut se situer au sein de la zone d'affichage E.

On a figuré, au sein de cet écran E, une zone d'affichage Z1 plus petite qui peut correspondre à un flux vidéo que l'utilisateur est en train de regarder. Cette zone d'affichage Z1 peut éventuellement occuper tout l'espace de l'écran E ou bien, comme sur la figure 2, qu'une partie de celui-ci.

La zone d'affichage Z2 correspond aux informations textuelles reçus du serveur de messagerie vocale. Celle-ci peut prendre la forme d'un bandeau dans lequel les informations textuelles peuvent défiler, mais bien d'autres dispositions peuvent bien évidemment être possibles.

L'interface d'entrée INTE peut permettre de contrôler l'affichage des informations textuelles, Par exemple, il peut s'agit de contrôler la vitesse de défilement. Il peut aussi s'agir de stopper la fonction et de supprimer la zone d'affichage Z2.

Il peut également s'agir de déclencher la prise de l'appel : selon un mode de réalisation optionnel due l'invention, il peut être proposé à l'utilisaleur appelé d'établir une session multimédia avec le client appelant qui peuvent remplacer ou non les sessions préalablement établies. En agissant sur l'interface d'entrée INTE, l'utilisateur transmet un signal vers le serveur de messagerie vocale S.

Ce signal peut être un signale de remplacement et déclencher au sein de celui-ci :
- l'interruption de la session multimédia SM établie entre le client appelant A et le serveur de messagerie vocal S et de la transmission d'informations textuelles entre ce dernier et le client appelé B ;
- l'établissement d'une nouvelle session multimédia entre le client appelant A et le client appelé B.

Ainsi, l'utilisateur du client B prenant connaissance du contenu du message laissé par l'appelant, peut décider que cet appel est important ou prioritaire par rapport à son activité actuelle et décider d'établir la communication directe. Cette fonctionnalité permet de gagner du temps en évitant à l'appelant d'avoir à donner l'intégralité du message, et à l'appelé d'avoir à rappeler l'appelant à la suite de sa session. Elle évite aussi des manipulations supplémentaires pour établir un nouvel appel.

Dons le cas où l'écran E est tactile, il peut être prévu qu'une simple pression sur la zone Z2 sur laquelle sont affichées les informations textuelles permet de transmettre le signal approprié vers le serveur de messagerie vocale S.

Un tel remplacement de session peut par exemple être réalisé par l'émission d'un message de signalisation SIP «INVITE» contenant un entête « Replace » tel que spécifié par le RFC 3891 de l'IETF.

L'interface peut également permettre de prendre l'appel sans pour autant interrompre la session textuelle en cours. Un signal de fusion est alors transmis par le client appelé et une nouvelle session est créée et fusionnée avec la session textuelle existante. Cette fonctionnalité peut par exemple être implémentée par l'émission d'un message de signalisation SIP « INVITE » contenant un entête « Join » tel que spécifié par le RFC 3911 de l'IETF.

L'interface d'entrée peut également prévoir la redirection de l'appel vers une tierce personne, par exemple une assistante ou un collègue. Un signal de redirection est alors émis par le client appelé vers le serveur de messagerie vocale S. Cette option est réalisable par l'émission d'un message de signalisation SIP « Invite » contenant un entête « Refer », spécifié par le RFC 3515 de l'IETF.

D'autres fonctionnalités utilisant les possibilités offertes par les protocoles de signalisations tels le protocole SIP sont également possibles. Un des avantages de l'invention est de pouvoir tirer profit de l'ensemble des ces fonctionnalités tout en permettant la convergence des sessions multimédia et textuelles.

A chaque fonction offerte correspond un signal transmis par le client appelé vers le serveur de messagerie vocale S. Ce signal est généralement constitué d'un message de signalisation, mais il peut éventuellement consister en un dialogue plus complexe.

Ces opérations de rem placement de fusion ou de redirection de sessions peuvent être effectuées automatiquement. L'utilisateur n'a qu'à activer une commande, sans avoir à préciser un numéro ou un identificateur du client appelant A puisque ces informations sont mémorisées au sein du serveur de signalisation S.

Une seule ou plusieurs de ces opérations peuvent être disponibles via l'interface d'entrée INTE.

Il peut être prévu un comportement par défaut qui peut être spécifié dans les paramètres de l'utilisateur. Uniquement l'opération correspondant à ce comportement par défaut pourra alors être proposée lors d'une session textuelle.

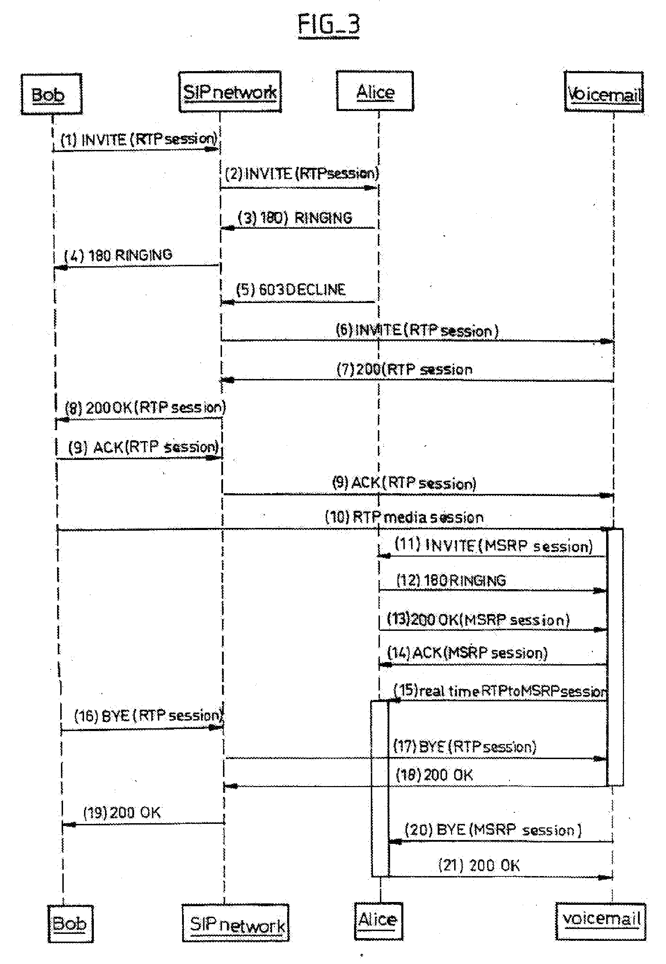

La figure 3 illustre une mise en oeuvre possible de l'invention utilisant les protocoles SIP et MSRP.

Dans cet exemple, l'utilisateur « Bob » souhaite joindre l'utilisateur « Alice » au travers d'un réseau de communication « SIP network » afin d'établir une session multimédia basé sur le protocole STP.

De façon classique, il émet un message d'invitation (1) vers le réseau « SIP network ». Ce message est habituellement un message SIP « INVITE ». Ce message (1) est relayé par le réseau de communication et acheminé jusqu'à l'utilisateur « Alice ».

Recevant ce message (2), le client de l'utilisateur « Alice » répond par un message « 3 » signifiant que l'invitation a été reçue et que le client signale l'appel entrant (par une sonnerie, par exemple). Ce message de signalisation (3) est également relayé par le réseau et parvient sous la forme d'un message de signalisation (4) jusqu'à l'appelant « Bob ». Ces messages de signalisation sont généralement des messages SIP « 180 RINGING ».

Dans l'exemple de la figure 3, Alice refuse l'appel entrant. Un message de signalisation (5) est alors transmis par son client pour signifier ce refus. Il s'agit généralement d'un message SIP « 603 DECLINE ».

Ce message (5) parvient au réseau de communication « SIP Network » au sein duquel un dispositif déclenche le réacheminement de l'appel vers un serveur de messagerie vocale « Voicemail ». Ce dispositif peut par exemple être formé d'un ou plusieurs « proxy SIP » (Dans le cadre d'une architecture IMS, il peut s'agir des fonctions CSCF pour « *Call Session Control Function* », qui transmettent la requête vers un serveur d'applications qui gère la fonction « messagerie » du réseau de communication.

Un message d'invitation (6) est alors transmis vers le serveur de messagerie vocale « Voicemail » de l'utilisateur Alice. Celui-ci accepte automatiquement l'appel et transmet en retour un message de signalisation (7). Ce message de signalisation (7) est transmis jusqu'au client appelant « Bob ». A la réception de ce message (8), le client « Bob » émet un message d'accord (9) qui est transmis jusqu'au serveur de messagerie vocale et permet ainsi l'établissement d'une session multimédia RTP (10) entre « Bob » et « Voicemail ».

Selon l'invention, le serveur de messagerie vocale « Voicemail » déclenche alors une session textuelle avec le client « Alice ». Il transmet pour cela un message d'invitation (11) vers le client « Alice », Un échange classique de messages de signalisation (12), (13) et (14) s'ensuit permettant l'établissement d'une session MSRP (15) entre le serveur « Voicemail » et le client « Alice ».

La session RTP et la session MSRP sont liée, au sein du serveur de signalisation « Voicemail » de sorte que le contenu de la première soit converti en informations textuelles transmises dans la seconde.

Le client appelant, « Bob », transmet plus tard un message de signalisation (16) pour terminer sa session avec le serveur de messagerie vocale « Voicemail ». Ce message (16) est typiquement un message SIP « BYE ». Il est transmis au serveur.

A la réception de ce message (17) le serveur de messagerie vocale
- d'une part termine la session RTP et transmet un message de confirmation au client « Bob » : messages de signalisatior (18) et (19) ; et,
- D'autre part, transmet un message de terminaison (20) au client « Alice », qui répond par un message de confirmation (21).

Ces messages de confirmation sont généralement des messages SIP « 200 OK ».

Le déclenchement de la fonctionnalité de conversion voix vers texte et d'établissement de la session textuelle (c'est-à-dire la transmission des informations textuelles vers le client appelé) peut être optionnel et déclenché à l'initiative de l'utilisateur appelé.

Par exemple, à la réception d'un appel entrant, plusieurs options peuvent lui être proposées, notamment :
- accepter l'appel
- refuser l'appel
- réacheminer l'appel vers la messagerie vocale avec établissement en session textuelle,
- réacheminer l'appel vers la messagerie vocale sans établissement en session textuelle.

Le déclenchement de la fonctionnalité peut également être assujetti à un paramètre du profil de l'utilisateur appelé.

Celui-ci paramètre son profil d'utilisataur et en fonction de ce paramètre les étapes de conversion voix vers texte et de transmission dans une session textuelle sont ou non déclenches à réception par le serveur de messagerie vocale d'une session multimédia destiné à cet utilisateur

Le convertisseur et l'interface textuelle ne sont alors actifs qu'en présence d'un paramètre dans le profil de l'utilisateur appelé. En son absence, le serveurs de messagerie vocale fonctionne conformément à l'état de l'art et mémorise le message entrant dans le mémoire MEM.

## Revendications

1. Serveur de messagerie vocale (S) connecté à un réseau de communication (N) comportant une interface multimédia (INTM) pour recevoir une session multimédia (SM) provenant d'un client appelant (A) et destiné à un utilisateur d'un client appelé (B), et une mémoire (MEM) destiné à mémoriser un contenu de ladite session multimédia, **caractérisé en ce qu'**il dispose en outre d'un convertisseur (STT) pour convertir à la volée toute ou partie de ladite session multimédia (SM) en informations textuelles et d'une interface textuelle (INTT) pour transmettre lesdites informations textuelles audit client appelé.

2. Serveur de messagerie vocale selon la revendication 1 dans lequel ladite interface textuelle est prévue pour transmettre lesdites informations textuelles au sein d'une session de messagerie instantanée (SMI).

3. Serveur de messagerie vocale selon la revendication précédente, dans lequel ladite session de messagerie instantanée est transportée par le protocole MSRP.

4. Serveur de messagerie vocale selon l'une des revendications 1 à 3, dans lequel lesdits convertisseur et interface textuelle ne sont actifs qu'en présence d'un paramètre dans le profil dudit utilisateur.

5. Serveur selon l'une des revendications précédentes, disposant en outre d'une interface utilisateur permettant, durant ladite session de messagerie instantanée, de recevoir dudit client appelé un signal de remplacement, et prévu pour à la réception d'un tel signal interrompre la transmission desdites informations textuelles et établir une nouvelle session multimédia entre ledit client appelé et ledit client appelant.

6. Serveur selon l'une des revendications 1 à 4, disposant en outre d'une interface utilisateur permettant, durant ladite session de messagerie instantanée, de recevoir dudit client appelé un signal de redirection, et prévu pour à la réception d'un tel signal établir une nouvelle session multimédia entre ledit client appelant et un client tiers dont l'identifiant est fourni par ledit signal de redirection.

7. Procédé de communication entre un client appelant (A) et un client appelé (B), consistant en la transmission d'une session multimédia (SM) destiné à un utilisateur dudit client appelé (B) vers un serveur de messagerie vocale (S), **caractérisé en ce qu'**il comporte une étape de conversion à la volée de tout ou partie de ladite session multimédia en informations textuelles et une étape de transmission desdites informations textuelles vers ledit client appelé (B).

8. Procédé selon la revendication précédente, dans lequel lesdites informations sont transmises vers ledit client appelé au sein d'une session de messagerie instantanée.

9. Procédé selon la revendication précédente, dans lequel ladite session de messagerie instantanée est transportée par le protocole MSRP.

10. Procédé selon l'une des revendications 7 à 9, comportant en outre une étape préalable de paramétrage du profil dudit utilisateur, consistant à déterminer un paramètre précisant si lesdites étapes de conversion et de transmission doivent ou non être déclenchés à réception par ledit serveur de messagerie vocale d'une session multimédia destiné audit utilisateur.

11. Procédé selon l'une des revendications 7 à 10, dans lequel durant ladite étape de transmission, ledit client appelé peut transmettre un signal de remplacement vers ledit serveur de messagerie vocale déclenchant interruption de la transmission desdites informations textures et l'établissement d'une nouvelle session multimédia entre ledit client appelant (A) et ledit client appelé (B).

12. Client de communication (B) disposant de moyens de réception d'informations textuelles, d'un dispositif d'affichage (E) prévue pour afficher tout ou partie du contenu desdites informations textuelle et d'une interface d'entrée (INTE) apte à être actionnée par un utilisateur, **caractérisé en ce que** lesdites informations textuelles forment une session textuelle établie avec un serveur de messagerie vocale (S) et associée à un client appelant (A), et **en ce que** ladite interface d'entrée comporte un moyen pour déclencher un signal destiné audit serveur de messagerie vocale pour établir une session multimédia avec ledit client appelant.

13. Client de communication selon la revendication précédente, dans lequel ladite session textuelle est une session de messagerie instantanée (SMI).

14. Client de communication selon la revendication précédente, dans lequel ladite session de messagerie instantanée est transportée par le protocole MSRP.

15. Client de communication selon l'une des revendications 12 à 14 dans lequel ladite interface d'entrée (INTE) dispose d'un moyen pour déclencher un signal destiné audit serveur de messagerie vocale pour interrompre ladite session textuelle.
